# EUROPEAN PATENT APPLICATION

(11) **EP 4 769 725 A1**
(43) Date of publication of application: **01.07.2026**
(21) Application number: 24935674.2
(22) Date of filing: 31.10.2024
(51) Int. Cl.: H01M 50/244, H01M 50/249, H01M 50/204, H01M 50/24, B60L 50/64

(54) **BATTERY DEVICE AND ELECTRIC DEVICE**

(30) Priority: 16.04.2024 CN 202420775612 U
(71) Applicant: Contemporary Amperex Technology Co., Limited, Ningde, Fujian 352100 (CN)
(72) Inventor: WEI, Jie, Ningde, Fujian 352100 (CN); MIAO, Huimin, Ningde, Fujian 352100 (CN); PAN, Xin, Ningde, Fujian 352100 (CN); KE, Qingpeng, Ningde, Fujian 352100 (CN)
(74) Representative: Gong, Jinping
(86) International application number: PCT/CN2024/129179
(87) International publication number: WO 2025/218145

(57) **Abstract**

A battery apparatus (100) and an electrical apparatus. The battery apparatus (100) includes a box body (10), a battery cell (20), and a protective plate (111). The battery cell (20) is disposed within the box body (10). The protective plate (111) is disposed at the bottom of the battery cell (20) along a gravity direction, the protective plate (111) including a first fiber-resin layer (1111), an enhancement layer (1113), a second fiber-resin layer (1112), and a reinforcement layer (1114), and the protective plate (111) including a first region (1119), where within the first region (1119), the first fiber-resin layer (1111), the enhancement layer (1113), and the second fiber-resin layer (1112) are sequentially stacked, the first fiber-resin layer (1111) being located on a side of the enhancement layer (1113) facing the battery cell (20), and the protective plate (111) further including a second region (11110), wherein within the second region (11110), the first fiber-resin layer (1111), the second fiber-resin layer (1112), and the reinforcement layer (1114) are sequentially stacked; or the reinforcement layer (1114), the first fiber-resin layer (1111), and the second fiber-resin layer (1112) are sequentially stacked. The aforementioned battery apparatus (100) exhibits high reliability.

## Description

### CROSS-REFERENCE TO RELATED APPLICATIONS

The present application claims priority to Chinese Patent Application No. 202420775612.7, titled "PROTECTIVE ASSEMBLY, BOX BODY, BATTERY, AND ELECTRICAL DEVICE," filed on April 16, 2024, the entire contents of which are incorporated herein by reference.

### TECHNICAL FIELD

The present application relates to the field of battery technologies, and in particular to a battery apparatus and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is an important factor related to their development.

How to improve the reliability of battery apparatuses remains an urgent issue to be addressed in the battery technology.

### SUMMARY OF THE INVENTION

In view of the above issues, the present application provides a battery apparatus and an electrical apparatus, which can improve the reliability of the battery apparatus.

In a first aspect, the present application provides a battery apparatus. The battery apparatus includes a box body, a battery cell, and a protective plate. The battery cell is disposed within the box body. The protective plate is disposed at the bottom of the battery cell along a gravity direction, the protective plate including a first fiber-resin layer, an enhancement layer, a second fiber-resin layer, and a reinforcement layer, and the protective plate including a first region, where within the first region, the first fiber-resin layer, the enhancement layer, and the second fiber-resin layer are sequentially stacked, the first fiber-resin layer being located on a side of the enhancement layer facing the battery cell, and the protective plate further including a second region, wherein within the second region, the first fiber-resin layer, the second fiber-resin layer, and the reinforcement layer are sequentially stacked; or the reinforcement layer, the first fiber-resin layer, and the second fiber-resin layer are sequentially stacked.

In the aforementioned solution, since the first region and the second region each include the first fiber-resin layer and the second fiber-resin layer, the risk of corrosion of the enhancement layer and the reinforcement layer can be reduced, thereby improving the reliability of the battery apparatus. In addition, within the second region, since the first fiber-resin layer, the second fiber-resin layer, and the reinforcement layer are sequentially stacked; or the reinforcement layer, the first fiber-resin layer, and the second fiber-resin layer are sequentially stacked, the reinforcement layer can enhance the strength and rigidity of the second region of the protective plate, thereby improving the ability of the second region of the protective plate to resist impact from external forces, which also contributes to improving the reliability of the battery apparatus.

In one or more embodiments of the first aspect, within the second region, the first fiber-resin layer, the second fiber-resin layer, and the reinforcement layer are sequentially stacked, a surface of the reinforcement layer facing away from the second fiber-resin layer being at least partially flush with a surface of the second fiber-resin layer facing away from the enhancement layer within the first region.

In the aforementioned solution, this facilitates improving the flatness of the protective plate. When external forces act on the protective plate, it helps reduce the risk of stress concentration in the protective plate leading to a decrease in structural strength of the protective plate.

In one or more embodiments of the first aspect, the first fiber-resin layer is of a flat-plate structure.

In the aforementioned solution, since the first fiber-resin layer is of a flat-plate structure, the first fiber-resin layer can uniformly distribute impact loads, thereby facilitating reducing the risk of excessive deformation of some battery cells within the box body.

In one or more embodiments of the first aspect, within the second region, the reinforcement layer, the first fiber-resin layer, and the second fiber-resin layer are sequentially stacked, a surface of the reinforcement layer facing away from the first fiber-resin layer being at least partially flush with a surface of the first fiber-resin layer facing away from the enhancement layer within the first region.

In the aforementioned solution, this facilitates improving the flatness of the protective plate. When external forces act on the protective plate and transfer to the interface between the first fiber-resin layer and the box body, it helps reduce the risk of stress concentration between the first fiber-resin layer and the box body leading to a decrease in connection strength between the protective plate and the box body.

In one or more implementations of the first aspect, a sealant injection groove is formed on a side of the reinforcement layer facing the battery cell, the sealant injection groove being configured to accommodate a sealant.

In the aforementioned solution, providing the sealant injection groove for accommodating the sealant facilitates improving the sealing performance between the protective plate and the box body.

In one or more embodiments of the first aspect, the depth of the sealant injection groove is 0.1 mm-1 mm.

In the aforementioned solution, setting the depth of the sealant injection groove within a reasonable range allows the sealant to have sufficient thickness on one hand, thereby enhancing the sealing effect between the protective plate and the box body; on the other hand, configuring a relatively small-sized sealant injection groove enables the protective plate as a whole to possess higher structural strength and also facilitates improving the connection strength between the protective plate and the box body.

In one or more embodiments of the first aspect, the second fiber-resin layer is of a flat-plate structure.

In the aforementioned solution, since the second fiber-resin layer is of a flat-plate structure, the second fiber-resin layer can uniformly distribute impact loads, reducing the risk of excessive deformation of the second fiber-resin layer when external forces act on the protective plate through the second fiber-resin layer, thereby facilitating lowering the risk of excessive deformation of some battery cells within the box body.

In one or more embodiments of the first aspect, the second region is arranged surrounding the first region.

In the aforementioned solution, since the second region is arranged surrounding the first region, the overall strength distribution of the protective plate is relatively uniform, and the structural stability is relatively strong. Additionally, in embodiments where the protective plate is connected to the box body through the second region, the risk of sealing failure around the enhancement layer within the first region during the connection process between the protective plate and the box body leading to corrosion of the enhancement layer can be reduced.

In one or more embodiments of the first aspect, the protective plate includes a plurality of first regions, the plurality of first regions being arranged at intervals, and a portion of the second region being located between two adjacent first regions.

In the aforementioned solution, arranging the plurality of first regions at intervals can optimize stress distribution across the protective plate, thereby reducing the risk of excessive deformation of the protective plate caused by concentrated stress at single points. Since a portion of the second region is located between two adjacent first regions, in embodiments where the protective plate is connected to the box body through the second region, the risk of sealing failure around the enhancement layer within the first region during the connection process between the protective plate and the box body leading to corrosion of the enhancement layer can be reduced.

In one or more embodiments of the first aspect, the protective plate further includes an adhesive layer, the enhancement layer and the first fiber-resin layer being connected via the adhesive layer, and/or the enhancement layer and the second fiber-resin layer being connected via the adhesive layer.

In the aforementioned solution, the provision of the adhesive layer can enhance the connection strength between the enhancement layer and the first fiber-resin layer, thereby reducing the risk of separation between the enhancement layer and the first fiber-resin layer and/or the second fiber-resin layer, which could otherwise lead to corrosion of the enhancement layer.

In one or more embodiments of the first aspect, the thickness of the adhesive layer is 0.05 mm-0.5 mm.

In the aforementioned solution, setting the thickness of the adhesive layer within a reasonable range, on one hand, effectively mitigates adhesive overflow during the bonding process between the enhancement layer and the first fiber-resin layer and/or the second fiber-resin layer; on the other hand, it can enable the adhesive layer to have sufficient thickness to enhance the connection strength between the enhancement layer and the first fiber-resin layer and/or the second fiber-resin layer.

In one or more embodiments of the first aspect, the thickness of the reinforcement layer is greater than or equal to the thickness of the enhancement layer.

In the aforementioned solution, in embodiments where the protective plate is connected to the box body through the second region, the reinforcement layer having a thickness greater than or equal to that of the enhancement layer facilitates improving connection stability between the protective plate and the box body.

In one or more embodiments of the first aspect, the thickness of the first fiber-resin layer is 0.1 mm-1.2 mm; and/or the thickness of the second fiber-resin layer is 0.1 mm-1.2 mm; and/or the thickness of the enhancement layer is 0.1 mm-1 mm.

In the aforementioned solution, setting the thickness of the first fiber-resin layer within a reasonable range, and/or setting the thickness of the second fiber-resin layer within a reasonable range, and/or setting the thickness of the enhancement layer within a reasonable range effectively controls the thickness and the weight of the protective plate, thereby improving the energy density of the battery apparatus.

In one or more embodiments of the first aspect, the thickness of the first fiber-resin layer is less than or equal to the thickness of the second fiber-resin layer.

In the aforementioned solution, since the thickness of the first fiber-resin layer is less than or equal to that of the second fiber-resin layer, the second fiber-resin layer is allowed to possess higher structural strength, which can reduce the risk of excessive deformation of the protective plate and corrosion of the enhancement layer when external forces act on the protective plate through the second fiber-resin layer.

In one or more embodiments of the first aspect, the reinforcement layer includes a plurality of frame edges, the plurality of frame edges being connected end-to-end to form a frame structure.

In the aforementioned solution, the reinforcement layer being of a frame structure facilitates positioning and helps to reduce assembly difficulty of the reinforcement layer.

In one or more embodiments of the first aspect, the plurality of frame edges have equal widths.

In the aforementioned solution, since the plurality of frame edges have equal widths, a reduction in the design and manufacturing costs of the reinforcement layer is facilitated.

In one or more embodiments of the first aspect, the protective plate further includes a first frame edge extending along a first direction and a second frame edge extending along a second direction, where a ratio of the width of the first frame edge to the dimension of the protective plate along a width direction of the first frame edge is greater than or equal to 0.05; and/or a ratio of the width of the second frame edge to the dimension of the protective plate along a width direction of the second frame edge is greater than or equal to 0.05.

In the aforementioned solution, this allows the first frame edge and/or the second frame edge to have a relatively large width, thereby improving the structural strength of the protective plate. Additionally, in embodiments where the box body is connected to the protective plate through the second region, such a configuration facilitates enhancing the connection strength between the box body and the protective plate.

In one or more embodiments of the first aspect, the protective plate is provided with a plurality of mounting holes, the mounting holes being disposed in the second region.

In the aforementioned solution, since the mounting holes are located in the second region, after connecting the protective plate to the box body, the first region remains highly sealed, such that the risk of corrosion of the enhancement layer is relatively low.

In one or more embodiments of the first aspect, the first fiber-resin layer includes a plurality of layers of first fiber-reinforced prepregs stacked on each other, the second fiber-resin layer includes a plurality of layers of second fiber-reinforced prepregs stacked on each other, and the reinforcement layer includes a plurality of layers of third fiber-reinforced prepregs stacked on each other.

In the aforementioned solution, while improving the strength and rigidity of the protective plate, the multi-layer structure helps disperse stress and reduce stress concentration phenomena, thereby enhancing fatigue resistance performance of the material.

In one or more embodiments of the first aspect, the first fiber-resin layer, the second fiber-resin layer, and the reinforcement layer are each independently selected from a glass fiber-reinforced polyamide resin member, a glass fiber-reinforced polypropylene resin member, a glass fiber-reinforced polyethylene resin member, a glass fiber-reinforced polycarbonate resin member, or a glass fiber-reinforced polystyrene resin member.

In one or more embodiments of the first aspect, the enhancement layer is a steel plate, an outer surface of the steel plate being provided with a galvanized layer, a galvanized iron alloy layer, or an electrophoretic paint protective layer.

In the aforementioned solution, since the outer surface of the steel plate is provided with the zinc coating, zinc-iron alloy coating, or electrophoretic paint protective coating, the enhancement layer is endowed with high wear resistance performance.

In a second aspect, the present application provides an electrical apparatus, which includes the battery apparatus according to one or more of the aforementioned embodiments, the battery apparatus being configured to provide electrical energy.

In the aforementioned solution, since the battery apparatus according to one or more of the aforementioned embodiments exhibits high reliability, the electrical apparatus including the battery apparatus according to one or more of the aforementioned embodiments also exhibits high reliability.

The above description is only a summary of the technical solutions of the present application. In order to be able to understand the technical means of the present application more clearly, the technical means can be implemented according to the content of the specification. Furthermore, to make other objectives, features and advantages of the present application more comprehensible, specific implementations of the present application are exemplified below.

### BRIEF DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:
FIG. 1 is a schematic structural diagram of a vehicle according to an embodiment of the present application;
FIG. 2 is an exploded schematic structural diagram of a battery apparatus in the vehicle shown in FIG. 1;
FIG. 3 is an exploded schematic structural diagram of a protective plate in the battery apparatus shown in FIG. 2;
FIG. 4 is a top-view schematic structural diagram of the protective plate in the battery apparatus shown in FIG. 2;
FIG. 5 is a cross-sectional schematic structural diagram of the protective plate shown in FIG. 4 along line A-A;
FIG. 6 is an enlarged schematic structural diagram of portion B of the protective plate shown in FIG. 5;
FIG. 7 is a cross-sectional view of a partial structure of a battery apparatus according to some other embodiments of the present application; and
FIG. 8 is a cross-sectional view of a partial structure of a battery apparatus according to further embodiments of the present application.

Reference numerals in the Detailed Description are as follows:
1000-vehicle; 100-battery apparatus; 10-box body; 11-first portion; 111-protective plate; 1111-first fiber-resin layer; 11111-first main body portion; 11112-first edge portion; 1112-second fiber-resin layer; 11121-second main body portion; 11122-second edge portion; 1113-enhancement layer; 1114-reinforcement layer; 11141-first frame edge; 11142-second frame edge; 11143-sealant injection groove; 1115-sealed cavity; 1116-flange portion; 1117-first adhesive layer; 1118-second adhesive layer; 112-frame; 1119-first region; 11110-second region; 12-second portion; 13-mounting hole; 20-battery cell; 200-controller; 300-motor; X-first direction; Y-second direction; Z-third direction.

### DETAILED DESCRIPTION

It should be noted that when a component is referred to as being "fixed to" or "disposed on" another component, it may be directly on the other component or indirectly on the other component. When a component is referred to as being "connected to" another component, it may be directly or indirectly connected to the other component. The orientation or positional relationships indicated by terms such as "upper," "lower," "left," and "right" are based on the orientation or positional relationships shown in the accompanying drawings. These terms are used for descriptive convenience only and do not indicate or imply that the referenced apparatus or element must have a specific orientation or be constructed and operated in a specific orientation. Therefore, these terms should not be construed as limiting the present application. For those of ordinary skill in the art, the specific meanings of the aforementioned terms may be understood based on specific contexts. Terms "first" and "second" are used only for descriptive purposes and are not to be understood as indicating or implying relative importance or implicitly specifying the number of technical features. The meaning of "a plurality of" is two or more, unless otherwise explicitly and specifically defined.

In the embodiments of the present application, the same reference signs denote the same components, and for the sake of brevity, detailed descriptions of the same components are omitted in different embodiments. It should be understood that the dimensions, such as the thicknesses, lengths, widths, or the like, of various components in the embodiments of the present application shown in the drawings are illustrative only and should not be construed as limiting the present application.

In the embodiments of the present application, a battery cell may be a secondary battery. The secondary battery refers to a battery cell that, after being discharged, can activate an active material by charging for continued use.

The battery cell includes but is not limited to a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like.

The battery cell generally includes an electrode assembly. The electrode assembly includes a positive electrode, a negative electrode and a spacer. In the charging and discharging process of the battery cell, active ions (such as lithium ions) are intercalated and de-intercalated between the positive electrode and the negative electrode in a reciprocating manner. The spacer is disposed between the positive electrode and the negative electrode, and can function to reduce the risk of short circuits between the positive and negative electrodes and allow active ions to pass through.

In some implementations, the battery cell further includes an electrolyte that functions to conduct ions between the positive electrode and the negative electrode. The electrolyte may be liquid, gel or solid. The liquid electrolyte includes electrolyte salt and a solvent.

In some implementations, the electrode assembly is of a wound structure. The positive electrode plate and the negative electrode plate are wound into the wound structure.

In some implementations, the electrode assembly is of a stacked structure.

In some implementations, the shape of the electrode assembly may be a cylinder, a flat shape, a polygon prism, or the like.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a polygonal prismatic battery cell (e.g., the polygonal prismatic battery cell is a hexagonal prismatic battery cell).

In the related art, a battery cell generally includes a shell and an electrode assembly. The shell may include a case and an end cover. The case has an opening. After the electrode assembly is placed into the case, the opening of the case may be closed by the end cover to form a sealed space within the housing for accommodating the electrode assembly.

The battery apparatus mentioned in the embodiments of the present disclosure may include one or more battery cell assemblies for providing voltage and capacity. The battery cell assembly may include a plurality of battery cells which are connected in series, in parallel or in parallel-series connection through bus components.

In some embodiments, a battery cell assembly is typically formed by arranging a plurality of battery cells; as an example, the battery cell assembly may be a battery module, where the battery module is formed by arranging and fixing a plurality of battery cells into an independent module. As an example, a battery module may be formed by bundling a plurality of battery cells by cable ties.

In some embodiments, the battery apparatus may be a battery pack. The battery pack comprises a box body and one or more battery cell assemblies. The battery cell assembly is accommodated in the box body.

As an example, the battery cell assembly may be a battery module, and the battery cell assembly may be accommodated in the box body by fixing the battery module in the box body.

As an example, the battery cell assembly may also be accommodated in the box body by directly fixing a plurality of battery cells in the box body.

In some embodiments, the box body may serve as a part of a chassis structure of the vehicle. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage electric cabinet, or the like.

A conventional battery apparatus generally includes a box body. The box body typically includes a frame and a protective plate. The frame defines an accommodating space of the box body, and the battery cells are accommodated within this accommodating space. The protective plate is connected to the bottom of the frame and covers an opening of the frame to enclose the accommodating space of the frame. The protective plate is typically made of metal. However, since the protective plate is exposed to the external environment, it is prone to corrosion. After prolonged corrosion, the protective plate is prone to failure, causing the accommodating space of the box body to communicate with the external environment. Consequently, the protective plate cannot fulfill its protective role for the battery cells, resulting in poor reliability of the battery apparatus.

To improve the reliability of the battery apparatus, embodiments of the present application provide a battery apparatus including a box body, a battery cell, and a protective plate. The battery cell is disposed within the box body. The protective plate is disposed at the bottom of the battery cell along a gravity direction, the protective plate including a first fiber-resin layer, an enhancement layer, a second fiber-resin layer, and a reinforcement layer, and the protective plate including a first region, where within the first region, the first fiber-resin layer, the enhancement layer, and the second fiber-resin layer are sequentially stacked, the first fiber-resin layer being located on a side of the enhancement layer facing the battery cell, and the protective plate further including a second region, wherein within the second region, the first fiber-resin layer, the second fiber-resin layer, and the reinforcement layer are sequentially stacked; or the reinforcement layer, the first fiber-resin layer, and the second fiber-resin layer are sequentially stacked. Since the first region and the second region each include the first fiber-resin layer and the second fiber-resin layer, the risk of corrosion of the enhancement layer and the reinforcement layer can be reduced, thereby improving the reliability of the battery apparatus. In addition, within the second region, since the first fiber-resin layer, the second fiber-resin layer, and the reinforcement layer are sequentially stacked; or the reinforcement layer, the first fiber-resin layer, and the second fiber-resin layer are sequentially stacked, the reinforcement layer can enhance the strength and rigidity of the second region of the protective plate, thereby improving the ability of the second region of the protective plate to resist impact from external forces, which also contributes to improving the reliability of the battery apparatus.

The technical solutions described in the embodiments of the present application are applicable to batteries and electrical devices using the batteries. Here, the electrical device can be, but is not limited to, a vehicle, a mobile phone, a portable device, a laptop computer, a ship, a spacecraft, an electric toy, a power tool, and the like. The vehicle may be a fuel vehicle, a gas vehicle, or a new energy vehicle, and the new energy vehicle may be a battery electric vehicle, a hybrid electric vehicle, an extended range vehicle, and the like. The spacecraft includes an airplane, a rocket, a space shuttle, a spaceship, and the like. The electric toy may include fixed or mobile electric toys, such as a game machine, an electric vehicle toy, an electric ship toy, an electric airplane toy, and the like. The electric tool includes an electric tool for metal cutting, an electric tool for grinding, an electric tool for assembling, and an electric tool for railways, such as an electric drill, an electric grinder, an electric wrench, an electric screwdriver, an electric hammer, an electric impact drill, a concrete vibrator, and an electric planer.

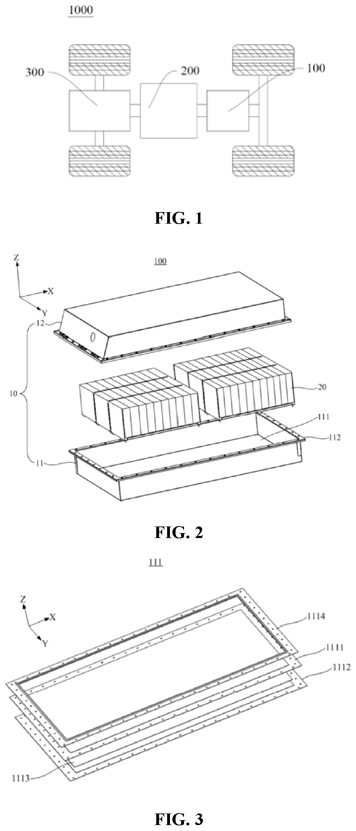

Referring to FIG. 1. FIG. 1 is a schematic structural diagram of a vehicle 1000 according to an embodiment of the present application. The vehicle 1000 may be a fuel vehicle, a gas vehicle, or a new energy vehicle. The new energy vehicle may be an all-electric vehicle, a hybrid vehicle, an extended-range electric vehicle, or the like. A battery apparatus 100 is arranged in the vehicle 1000. The battery apparatus 100 may be arranged at the bottom, or head, or tail of the vehicle 1000. The battery apparatus 100 may be configured to supply power to the vehicle 1000. For example, the battery apparatus 100 may be used as an operating power source of the vehicle 1000. The vehicle 1000 may further include a controller 200 and a motor 300, where the controller 200 is used to control the battery apparatus 100 to supply power to the motor 300, for example, for the operating power demand when the vehicle 1000 is starting, navigating and driving.

In some embodiments of the present application, the battery apparatus 100 may not only be used as an operating power source for the vehicle 1000, but also as a driving power source for the vehicle 1000, to replace or partially replace fuel or natural gas to provide driving power for the vehicle 1000.

Referring to FIG. 2. FIG. 2 is a schematic exploded view of a battery apparatus 100 according to an embodiment of the present application. The battery apparatus 100 includes a box body 10 and a battery cell 20, where the battery cell 20 is accommodated within the box body 10. Here, the box body 10 is used to provide an accommodating space for the battery cell 20, and the box body 10 can be of various structures. In some embodiments, the box body 10 may include a first portion 11 and a second portion 12, the first portion 11 and the second portion 12 covering each other, and the first portion 11 and the second portion 12 together defining the accommodating space for accommodating the battery cell 20. The second portion 12 may be of a hollow structure with an opening at one end, and the first portion 11 may be of a plate-shaped structure, where the first portion 11 covers the opening side of the second portion 12 such that the first portion 11 and the second portion 12 together define the accommodation space. The first portion 11 and the second portion 12 may each be of a hollow structure with an opening at one end, where the opening side of the first portion 11 covers the opening side of the second portion 12. In some embodiments, the first portion 11 includes a frame 112 and a protective plate 111. The frame 112 defines the aforementioned accommodating space. The protective plate 111 may be of a plate-shaped structure, and the protective plate 111 is connected to the bottom of the frame 112 and covers an opening at one end of the frame 112. The second portion 12 is connected to a top of the frame 112 and covers an opening at the other end of the frame 112 to enclose the accommodating space. Of course, the box body 10 formed by the first portion 11 and the second portion 12 may be of a variety of shapes, such as a cylinder and a rectangular solid.

In some embodiments, the box body 10 may serve as a part of a chassis structure of the vehicle 1000. For example, a portion of the box body 10 may become at least a portion of the floor of the vehicle 1000, or a portion of the box body 10 may become at least a portion of the cross beam and the longitudinal beam of the vehicle 1000.

In the battery apparatus 100, in a case where there are a plurality of battery cells 20, the plurality of battery cells 20 may be connected in series or in parallel or in parallel-series connection, where the parallel-series connection means that the plurality of battery cells 20 are connected in both series and parallel. The plurality of battery cells 20 may be directly connected in series, parallel or series and parallel together, and then, the whole formed by the plurality of battery cells 20 is accommodated in the box body 10. Of course, the battery apparatus 100 may also be a battery module composed of a plurality of battery cells 20 in series, parallel or series and parallel first, and then, a plurality of battery modules are connected in series, parallel or series and parallel to form a whole which is accommodated in the box body 10. The battery apparatus 100 may further include other structures, for example, the battery apparatus 100 may further include a busbar component for achieving electrical connection between the plurality of battery cells 20.

Each battery cell 20 may be a secondary battery or a primary battery, where the secondary battery refers to a battery cell 20 that can continue to be used by activating an active material by charging after the battery cell 20 is discharged, and the primary battery refers to a battery cell 20 that cannot continue to be used by activating the active material by charging after electric energy of the battery cell 20 is used up. The battery cell 20 may also be a lithium-ion battery, a sodium-ion battery, a sodium-lithium-ion battery, a lithium-metal battery, a sodium-metal battery, a lithium-sulfur battery, a magnesium-ion battery, a nickel-metal hydride battery, a nickel-cadmium battery, a lead storage battery, and the like, but is not limited to this. The battery cell 20 may be a cylindrical battery cell 20, a prismatic battery cell 20, a pouch battery cell 20, or a battery cell 20 of other shapes. The prismatic battery cell 20 includes a square-shell battery cell 20, a blade-shaped battery cell 20, and a polygonal prismatic battery cell 20 (e.g., the polygonal prismatic battery cell 20 is a hexagonal prismatic battery cell 20). The present application imposes no specific limitations.

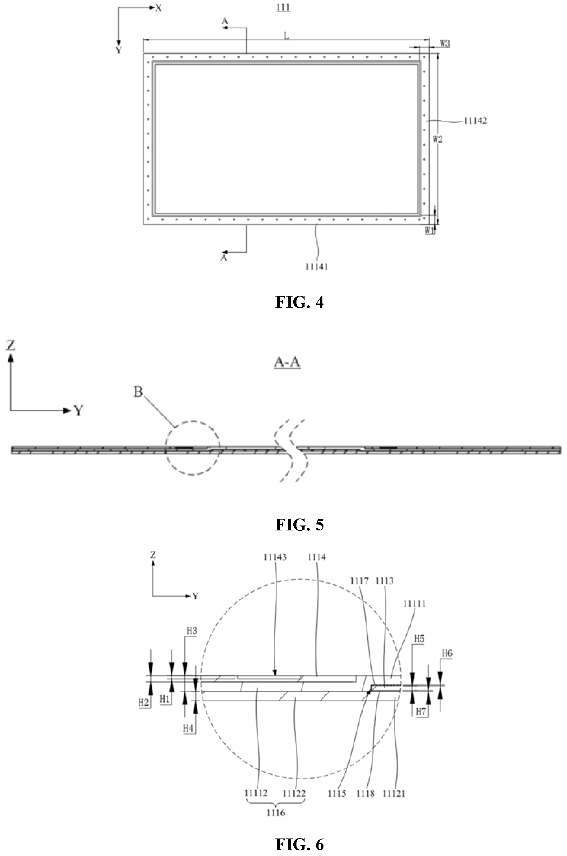

It should be noted that the box body 10 has a height direction, a length direction, and a width direction, where the height direction of the box body 10 may refer to the Z direction (i.e., the third direction Z) shown in FIGS. 2, 3, 5, and 6, the width direction of the box body 10 may refer to the Y direction (i.e., the second direction Y) shown in FIGS. 2 to 6, and the length direction of the box body 10 may refer to the X direction (i.e., the first direction X) shown in FIGS. 2 to 4. Since the box body 10 defines the profile structure of the battery apparatus 100, the height direction of the box body 10 is the height direction of the battery apparatus 100, the length direction of the box body 10 is the length direction of the battery apparatus 100, and the width direction of the box body 10 is the width direction of the battery apparatus 100. The length of the battery apparatus 100 may be greater than the width, or may be smaller than the width. In some embodiments, the third direction Z may also be the thickness direction of the protective plate 111.

According to some embodiments of the present application, please refer to FIGS. 2 to 8, the present application provides a battery apparatus 100. The battery apparatus 100 includes a box body 10, a battery cell 20, and a protective plate 111. The battery cell 20 is disposed within the box body 10. The protective plate 111 is disposed at the bottom of the battery cell 20 along a gravity direction, the protective plate 111 including a first fiber-resin layer 1111, an enhancement layer 1113, a second fiber-resin layer 1112, and a reinforcement layer 1114, and the protective plate 111 including a first region 1119, where within the first region 1119, the first fiber-resin layer 1111, the enhancement layer 1113, and the second fiber-resin layer 1112 are sequentially stacked, the first fiber-resin layer 1111 being located on a side of the enhancement layer 1113 facing the battery cell 20, and the protective plate 111 further including a second region 11110, where within the second region 11110, the first fiber-resin layer 1111, the second fiber-resin layer 1112, and the reinforcement layer 1114 are sequentially stacked; or the reinforcement layer 1114, the first fiber-resin layer 1111, and the second fiber-resin layer 1112 are sequentially stacked.

In some embodiments, the box body 10 may include a frame 112 and a protective plate 111. The frame 112 has an opening at its bottom, and the protective plate 111 closes the aforementioned opening. In some other embodiments, the box body 10 may further include a cover plate. The frame 112 has two oppositely arranged openings, and the cover plate and the protective plate 111 respectively close the two openings.

The first fiber-resin layer 1111 may also be referred to as a first anti-corrosion layer member, the second fiber-resin layer 1112 may also be referred to as a second anti-corrosion layer member, and the reinforcement layer 1114 may also be referred to as a reinforcement member.

The first fiber-resin layer 1111 and the second fiber-resin layer 1112 are sealingly connected to form an integral body. A sealed cavity 1115 is formed inside this integral body. It can be understood that the sealed cavity 1115 is isolated from the external environment of the protective plate 111. A first accommodation groove may be formed on a surface of the first fiber-resin layer 1111 facing the second fiber-resin layer 1112. The second fiber-resin layer 1112 is sealingly connected to the first fiber-resin layer 1111 to enclose the first accommodation groove, thereby forming the aforementioned sealed cavity 1115. Alternatively, a second accommodation groove may be formed on a surface of the second fiber-resin layer 1112 facing the first fiber-resin layer 1111. The first fiber-resin layer 1111 is sealingly connected to the second fiber-resin layer 1112 to enclose the second accommodation groove, thereby forming the aforementioned sealed cavity 1115. Further, a first accommodation groove may be formed on the surface of the first fiber-resin layer 1111 facing the second fiber-resin layer 1112, and a second accommodation groove may be formed on the surface of the second fiber-resin layer 1112 facing the first fiber-resin layer 1111. The second fiber-resin layer 1112 is sealingly connected to the first fiber-resin layer 1111 to enclose both the first accommodation groove and the second accommodation groove, thereby forming the aforementioned sealed cavity 1115. The sealing connection manner between the first fiber-resin layer 1111 and the second fiber-resin layer 1112 may include, but is not limited to, adhesive bonding, welding, or press-fit connection.

The enhancement layer 1113 is the main body component of the protective plate 111. The enhancement layer 1113 primarily serves to protect the battery cell 20. For example, the enhancement layer 1113 is used to block foreign objects from directly impacting the battery cell 20. The enhancement layer 1113 may be made of metallic materials, including but not limited to steel, aluminum alloy, titanium alloy, copper, or iron. Of course, in other embodiments, the enhancement layer 1113 may alternatively be made of non-metal materials, such as ceramic materials. The enhancement layer 1113 may be of a plate-shaped structure and cover part or all of the opening of the frame 112. In a height direction of the box body 10, the enhancement layer 1113 is stacked between the first fiber-resin layer 1111 and the second fiber-resin layer 1112. The enhancement layer 1113 is housed within the aforementioned sealed cavity 1115 to isolate the enhancement layer 1113 from the external environment of the protective plate 111. In some embodiments, the shape and dimensions of the sealed cavity 1115 may match those of the enhancement layer 1113 to restrict the position of the enhancement layer 1113.

In some embodiments, the height direction of the box body 10 may be the gravity direction.

In some embodiments, the box body 10 is connected to the protective plate 111 through the second region 11110 of the protective plate 111. In such embodiments, the reinforcement layer 1114 can not only improve the overall structural strength of the protective plate 111 but also enhance the connection strength between the box body 10 and the protective plate 111.

In some embodiments, on the same projection plane perpendicular to the third direction Z, an orthographic projection of the battery cell 20 at least partially overlaps with an orthographic projection of the enhancement layer 1113.

In some embodiments, at least a portion of the orthographic projection of the battery cell 20 in the same projection plane perpendicular to the third direction Z is located within the first region 1119.

In some embodiments, the first fiber-resin layer 1111 includes a first main body portion 11111 and a first edge portion 11112 connected to an edge side of the first main body portion 11111. The second fiber-resin layer 1112 includes a second main body portion 11121 and a second edge portion 11122 connected to an edge side of the second main body portion 11121. A sealed cavity 1115 is formed between the first main body portion 11111 and the second main body portion 11121. The first edge portion 11112 and the second edge portion 11122 are sealingly connected to form a flange portion 1116, where the flange portion 1116 is used to connect to the frame 112. The first main body portion 11111 is the main body part of the first fiber-resin layer 1111, and the second main body portion 11121 is the main body part of the second fiber-resin layer 1112. The sealed cavity 1115 is formed between the first main body portion 11111 and the second main body portion 11121. The first edge portion 11112 is connected to an edge side of the first main body portion 11111, and the second edge portion 11122 is connected to an edge side of the second main body portion 11121. Herein, the first main body portion 11111 and the second main body portion 11121 are located in the first region 1119, while the first edge portion 11112 and the second edge portion 11122 are located in the second region 11110.

In some embodiments, both the first edge portion 11112 and the second edge portion 11122 are of closed-loop structures. The first edge portion 11112 is provided surrounding the first main body portion 11111, and the second edge portion 11122 is provided surrounding the second main body portion 11121. The first edge portion 11112 and the second edge portion 11122 are sealingly connected to form an annular sealed boundary, which is used to isolate the sealed cavity 1115 from the external environment of the protective plate 111.

In some embodiments, the protective plate 111 further includes the flange portion 1116, where the flange portion 1116 is a part for connecting to the aforementioned frame 112. The flange portion 1116 is formed by stacking and interconnecting the first edge portion 11112 and the second edge portion 11122 along the height direction of the box body 10. Herein, the flange portion 1116 is located in the second region 11110.

It can be understood that when both the first edge portion 11112 and the second edge portion 11122 are of closed-loop structures, the flange portion 1116 is also of a closed-loop structure. In some embodiments, a first connection hole is formed on the flange portion 1116, the first connection hole penetrating the first edge portion 11112 and the second edge portion 11122. A second connection hole is formed on the frame 112. A fastener such as a bolt or a rivet may be inserted through the first connection hole and the second connection hole to connect the flange portion 1116 and the frame 112. Herein, the first connection hole may also be referred to as the mounting hole 13 described below. Of course, in other embodiments, the flange portion 1116 and the frame 112 may alternatively adopt other connection methods, such as adhesive bonding or welding.

The reinforcement layer 1114 may cover the entire flange portion 1116 or a part of the flange portion 1116. In a case where the flange portion 1116 is of a closed-loop structure, the number of the reinforcement layer 1114 may be one or a plurality. In a case of a single reinforcement layer 1114, the reinforcement layer 1114 is of a closed-loop structure and is disposed on the flange portion 1116. In a case of a plurality of reinforcement layers 1114, the plurality of reinforcement layers 1114 are arranged at intervals along the periphery of the flange portion 1116. When the flange portion 1116 is provided with the first connection hole, the reinforcement layer 1114 is provided with a third connection hole aligned directly opposite to the first connection hole. Herein, the third connection hole may also be referred to as the mounting hole 13 described below.

In some embodiments, the reinforcement layer 1114, the first edge portion 11112, and the second edge portion 11122 are press-fit connected.

In some embodiments, the first fiber-resin layer 1111, the enhancement layer 1113, and the second fiber-resin layer 1112 are press-fit connected.

In the aforementioned solution, since the first region 1119 and the second region 11110 each include the first fiber-resin layer 1111 and the second fiber-resin layer 1112, the risk of corrosion of the enhancement layer 1113 and the reinforcement layer 1114 can be reduced, thereby improving the reliability of the battery apparatus 100. In addition, within the second region 11110, since the first fiber-resin layer 1111, the second fiber-resin layer 1112, and the reinforcement layer 1114 are sequentially stacked; or the reinforcement layer 1114, the first fiber-resin layer 1111, and the second fiber-resin layer 1112 are sequentially stacked, the reinforcement layer 1114 can enhance the strength and rigidity of the second region 11110 of the protective plate 111, thereby improving the ability of the second region 11110 of the protective plate 111 to resist impact from external forces, which also contributes to improving the reliability of the battery apparatus 100.

According to some embodiments of the present application, please refer to FIGS. 2 to 8, within the second region 11110, the first fiber-resin layer 1111, the second fiber-resin layer 1112, and the reinforcement layer 1114 are sequentially stacked, a surface of the reinforcement layer 1114 facing away from the second fiber-resin layer 1112 being at least partially flush with a surface of the second fiber-resin layer 1112 facing away from the enhancement layer 1113 within the first region 1119.

In some embodiments, the surface of the reinforcement layer 1114 facing away from the second fiber-resin layer 1112 is flush with the surface of the second fiber-resin layer 1112 facing away from the enhancement layer 1113 within the first region 1119.

In some embodiments, the surface of the reinforcement layer 1114 facing away from the second fiber-resin layer 1112 does not protrude beyond the surface of the second fiber-resin layer 1112 facing away from the enhancement layer 1113 within the first region 1119.

In some embodiments, a fourth accommodation groove is formed on a side of the second edge portion 11122 facing away from the first edge portion 11112, and the reinforcement layer 1114 is accommodated within the fourth accommodation groove. It can be understood that the depth of the fourth accommodation groove is equal to the thickness of the reinforcement layer 1114, such that a surface of the reinforcement layer 1114 facing away from the first edge portion 11112 is flush with a surface of the second main body portion 11121 facing away from the first main body portion 11111. That is, the surface of the reinforcement layer 1114 facing away from the first edge portion 11112 and the surface of the second main body portion 11121 facing away from the first main body portion 11111 lie on the same horizontal plane.

In the aforementioned solution, this facilitates improving the flatness of the protective plate 111. When external forces act on the protective plate 111, it helps reduce the risk of stress concentration in the protective plate 111 leading to a decrease in structural strength of the protective plate 111.

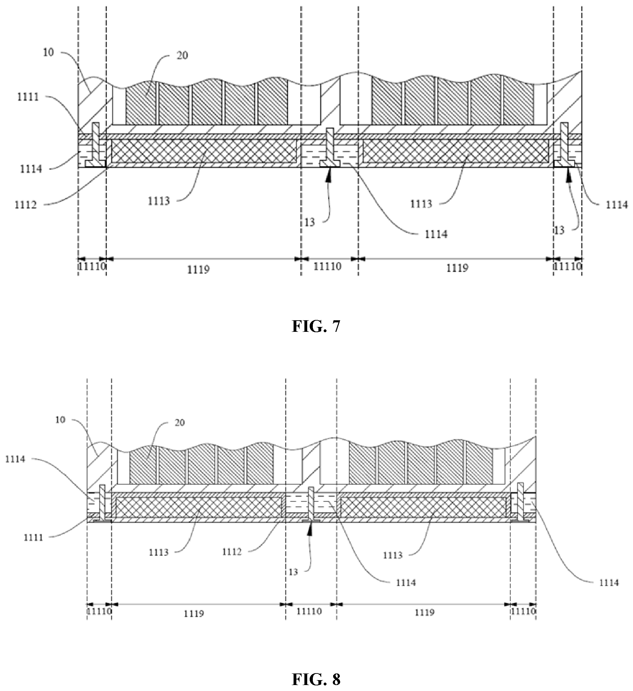

According to some embodiments of the present application, please refer to FIG. 7, the first fiber-resin layer 1111 is of a flat-plate structure.

In some embodiments, the first fiber-resin layer 1111 is of a flat-plate structure. Within the second region 11110, the first fiber-resin layer 1111, the second fiber-resin layer 1112, and the reinforcement layer 1114 are sequentially stacked, a surface of the reinforcement layer 1114 facing away from the second fiber-resin layer 1112 being flush with a surface of the second fiber-resin layer 1112 facing away from the enhancement layer 1113 within the first region 1119. In this embodiment, the flat-plate-shaped protective plate 111 may be processed through an extrusion molding process, which is beneficial to improving the production efficiency of the protective plate 111.

In the aforementioned solution, since the first fiber-resin layer 1111 is of a flat-plate structure, the first fiber-resin layer 1111 can uniformly distribute impact loads, thereby facilitating reducing the risk of excessive deformation of some battery cells 20 within the box body 10.

According to some embodiments of the present application, please refer to FIG. 7, within the second region 11110, the reinforcement layer 1114, the first fiber-resin layer 1111, and the second fiber-resin layer 1112 are sequentially stacked, a surface of the reinforcement layer 1114 facing away from the first fiber-resin layer 1111 being at least partially flush with a surface of the first fiber-resin layer 1111 facing away from the enhancement layer 1113 within the first region 1119.

In some embodiments, the surface of the reinforcement layer 1114 facing away from the first fiber-resin layer 1111 is flush with the surface of the first fiber-resin layer 1111 facing away from the enhancement layer 1113 within the first region 1119.

In some embodiments, the surface of the reinforcement layer 1114 facing away from the first fiber-resin layer 1111 does not protrude beyond the surface of the first fiber-resin layer 1111 facing away from the enhancement layer 1113 within the first region 1119.

In some embodiments, a third accommodation groove is formed on a side of the first edge portion 11112 facing away from the second edge portion 11122, and the reinforcement layer 1114 is accommodated within the third accommodation groove. It can be understood that the depth of the third accommodation groove is equal to the thickness of the reinforcement layer 1114, such that a surface of the reinforcement layer 1114 facing away from the second edge portion 11122 is flush with a surface of the first main body portion 11111 facing away from the second main body portion 11121. That is, the surface of the reinforcement layer 1114 facing away from the second edge portion 11122 and the surface of the first main body portion 11111 facing away from the second main body portion 11121 lie on the same horizontal plane.

In the aforementioned solution, this facilitates improving the flatness of the protective plate 111. When external forces act on the protective plate 111 and transfer to the interface between the first fiber-resin layer 1111 and the box body 10, it helps reduce the risk of stress concentration between the first fiber-resin layer 1111 and the box body 10 leading to a decrease in connection strength between the protective plate 111 and the box body 10.

According to some embodiments of the present application, please refer to FIGS. 2-8, a sealant injection groove 11143 is formed on a side of the reinforcement layer 1114 facing the battery cell 20, the sealant injection groove 11143 being configured to accommodate a sealant.

In some embodiments, the reinforcement layer 1114 is of a frame-shaped structure, and the sealant injection groove 11143 extends along a periphery of the reinforcement layer 1114 and is closed to form a closed-loop structure. In a case where the sealant injection groove 11143 contains a sealant, the sealant adheres between the reinforcement layer 1114 and the frame 112 to form an annular sealed boundary. This annular sealed boundary is disposed surrounding the aforementioned accommodating space to isolate the accommodating space from the external environment of the box body 10.

In the aforementioned solution, providing the sealant injection groove 11143 for accommodating the sealant facilitates improving the sealing performance between the protective plate 111 and the box body 10.

According to some embodiments of the present application, please refer to FIGS. 2-8, the depth of the sealant injection groove 11143 is 0.1-1 mm.

The depth H₁ of the sealant injection groove 11143 refers to the dimension of the sealant injection groove 11143 along the height direction of the box body 10. The depth H₁ of the sealant injection groove 11143 may be determined according to actual application requirements, and specifically may be 0.1 mm, 0.2 mm, 0.3 mm, 0.4 mm, 0.5 mm, 0.6 mm, 0.7 mm, 0.8 mm, 0.9 mm, 1 mm, or the like.

In the aforementioned solution, setting the depth of the sealant injection groove 11143 within a reasonable range allows the sealant to have sufficient thickness on one hand, thereby enhancing the sealing effect between the protective plate 111 and the box body 10; on the other hand, configuring a relatively small-sized sealant injection groove 11143 enables the protective plate 111 as a whole to possess higher structural strength and also facilitates improving the connection strength between the protective plate 111 and the box body 10.

According to some embodiments of the present application, please refer to FIGS. 2-8, the second fiber-resin layer 1112 is of a flat-plate structure.

In some embodiments, the second fiber-resin layer 1112 is of a flat-plate structure. Within the second region 11110, the reinforcement layer 1114, the first fiber-resin layer 1111, and the second fiber-resin layer 1112 are sequentially stacked, a surface of the reinforcement layer 1114 facing away from the first fiber-resin layer 1111 being flush with a surface of the first fiber-resin layer 1111 facing away from the enhancement layer 1113 within the first region 1119. In this embodiment, the flat-plate-shaped protective plate 111 may be processed through an extrusion molding process, which is beneficial to improving the production efficiency of the protective plate 111.

In the aforementioned solution, since the second fiber-resin layer 1112 is of a flat-plate structure, the second fiber-resin layer 1112 can uniformly distribute impact loads, reducing the risk of excessive deformation of the second fiber-resin layer 1112 when external forces act on the protective plate 111 through the second fiber-resin layer 1112, thereby facilitating lowering the risk of excessive deformation of some battery cells 20 within the box body 10.

According to some embodiments of the present application, please refer to FIGS. 2-8, the second region 11110 is arranged surrounding the first region 1119.

In some embodiments, since the second region 11110 is arranged surrounding the first region 1119, on the same projection plane perpendicular to the third direction Z, the orthographic projection of the reinforcement layer 1114 is arranged surrounding the orthographic projection of the enhancement layer 1113.

The shape of the reinforcement layer 1114 may be of a rectangular frame shape, a double rectangular frame shape, a U-shape, or the like.

In the aforementioned solution, since the second region 11110 is arranged surrounding the first region 1119, the overall strength distribution of the protective plate 111 is relatively uniform, and the structural stability is relatively strong. Additionally, in embodiments where the protective plate 111 is connected to the box body 10 through the second region 11110, the risk of sealing failure around the enhancement layer 1113 within the first region 1119 during the connection process between the protective plate 111 and the box body 10 leading to corrosion of the enhancement layer 1113 can be reduced.

According to some embodiments of the present application, please refer to FIGS. 2-8, the protective plate 111 includes a plurality of first regions 1119, the plurality of first regions 1119 being arranged at intervals, and a portion of the second region 11110 being located between two adjacent first regions 1119.

For a protective plate 111 of the same dimensions, compared to configuring only one first region 1119, arranging a plurality of spaced first regions 1119 can reduce the risk of excessive force concentration at single points on the protective plate 111. This also facilitates cost savings, i.e., only on the same projection plane perpendicular to the third direction Z.

In the aforementioned solution, arranging the plurality of first regions 1119 at intervals can optimize stress distribution across the protective plate 111, thereby reducing the risk of excessive deformation of the protective plate 111 caused by excessive force concentration at single points. Since a portion of the second region 11110 is located between two adjacent first regions 1119, in embodiments where the protective plate 111 is connected to the box body 10 through the second region 11110, the risk of sealing failure around the enhancement layer 1113 within the first region 1119 during the connection process between the protective plate 111 and the box body 10 leading to corrosion of the enhancement layer 1113 can be reduced.

According to some embodiments of the present application, please refer to FIGS. 2-8, the protective plate 111 further includes an adhesive layer, the enhancement layer 1113 and the first fiber-resin layer 1111 being connected via the adhesive layer, and/or the enhancement layer 1113 and the second fiber-resin layer 1112 being connected via the adhesive layer.

The adhesive layer may include a first adhesive layer 1117 and a second adhesive layer 1118.

The first adhesive layer 1117 is used to bond the first fiber-resin layer 1111 and the enhancement layer 1113. During the assembly process of the protective plate 111, an adhesive film may be attached or an adhesive agent may be applied to the surface of the first fiber-resin layer 1111 facing the enhancement layer 1113 to form the first adhesive layer 1117. Alternatively, an adhesive film may be attached or an adhesive agent may be applied to the surface of the enhancement layer 1113 facing the first fiber-resin layer 1111 layer member to form the first adhesive layer 1117. Then, the enhancement layer 1113 is stacked between the first fiber-resin layer 1111 and the second fiber-resin layer 1112 to bond the enhancement layer 1113 to the first fiber-resin layer 1111.

The second adhesive layer 1118 is used to bond the second fiber-resin layer 1112 layer member 1112 and the enhancement layer 1113. During the assembly process of the protective plate 111, an adhesive film may be attached or an adhesive agent may be applied to the surface of the second fiber-resin layer 1112 layer member 1112 facing the enhancement layer 1113 to form the second adhesive layer 1118. Alternatively, an adhesive film may be attached or an adhesive agent may be applied to the surface of the enhancement layer 1113 facing the second fiber-resin layer 1112 layer member 1112 to form the second adhesive layer 1118. Then, the enhancement layer 1113 is stacked between the first fiber-resin layer 1111 layer member 1111 and the second fiber-resin layer 1112 layer member 1112 to bond the enhancement layer 1113 to the second fiber-resin layer 1112 layer member 1112.

In the aforementioned solution, the provision of the adhesive layer can enhance the connection strength between the enhancement layer 1113 and the first fiber-resin layer 1111, thereby reducing the risk of separation between the enhancement layer 1113 and the first fiber-resin layer 1111 and/or the second fiber-resin layer 1112, which could otherwise lead to corrosion of the enhancement layer 1113.

According to some embodiments of the present application, please refer to FIGS. 2-8, the thickness of the adhesive layer is 0.05 mm-0.5 mm.

In embodiments where the adhesive layer includes a first adhesive layer 1117 and a second adhesive layer 1118, the thickness of the adhesive layer being 0.05 mm-0.5 mm means that the thickness H₆ of the first adhesive layer 1117 is 0.05 mm-0.5 mm, and the thickness H₇ of the second adhesive layer 1118 is 0.05 mm-0.5 mm.

The thickness H₆ of the first adhesive layer 1117 refers to the dimension of the first adhesive layer 1117 along the height direction of the box body 10. The thickness H₆ of the first adhesive layer 1117 may be determined according to actual application requirements, and specifically may be 0.05 mm, 0.1 mm, 0.15 mm, 0.2 mm, 0.25 mm, 0.3 mm, 0.35 mm, 0.4 mm, 0.45 mm, 0.5 mm, or the like.

The thickness H₇ of the second adhesive layer 1118 refers to the dimension of the second adhesive layer 1118 along the height direction of the box body 10. The thickness H₇ of the second adhesive layer 1118 may be determined according to actual application requirements, and specifically may be 0.05 mm, 0.1 mm, 0.15 mm, 0.2 mm, 0.25 mm, 0.3 mm, 0.35 mm, 0.4 mm, 0.45 mm, 0.5 mm, or the like.

In the aforementioned solution, setting the thickness of the adhesive layer within a reasonable range, on one hand, effectively mitigates adhesive overflow during the bonding process between the enhancement layer 1113 and the first fiber-resin layer 1111 and/or the second fiber-resin layer 1112; on the other hand, it can enable the adhesive layer to have sufficient thickness to enhance the connection strength between the enhancement layer 1113 and the first fiber-resin layer 1111 and/or the second fiber-resin layer 1112.

According to some embodiments of the present application, please refer to FIGS. 2-8, the thickness of the reinforcement layer 1114 is greater than or equal to the thickness of the enhancement layer 1113.

The thickness H₂ of the reinforcement layer 1114 may be greater than the thickness H₅ of the enhancement layer 1113, or may be equal to the thickness H₅ of the enhancement layer 1113. Taking any plane perpendicular to the height direction of the box body 10 as a reference surface, the projection of the reinforcement layer 1114 on this reference surface may partially overlap with the projection of the enhancement layer 1113 on this reference surface, meaning that at least a portion of the reinforcement layer 1114 and at least a portion of the enhancement layer 1113 are aligned directly opposite to each other along the height direction of the box body 10. Alternatively, the projection of the reinforcement layer 1114 on this reference surface may not overlap with the projection of the enhancement layer 1113 on this reference surface, meaning that the reinforcement layer 1114 and the enhancement layer 1113 are disposed in a misaligned manner in a direction perpendicular to the height direction of the box body 10.

In the aforementioned solution, in embodiments where the protective plate 111 is connected to the box body 10 through the second region 11110, the reinforcement layer 1114 having a thickness greater than or equal to that of the enhancement layer 1113 facilitates improving connection stability between the protective plate 111 and the box body 10.

According to some embodiments of the present application, please refer to FIGS. 2-8, the thickness of the first fiber-resin layer 1111 is 0.1 mm-1.2 mm; and/or the thickness of the second fiber-resin layer 1112 is 0.1 mm-1.2 mm; and/or the thickness of the enhancement layer 1113 is 0.1 mm-1 mm.

The thickness H₃ of the first fiber-resin layer 1111 refers to the dimension of the first fiber-resin layer 1111 along the height direction of the box body 10.

The thickness H₃ of the first fiber-resin layer 1111 may be determined according to actual application requirements, and specifically may be 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, or the like.

The thickness H₄ of the second fiber-resin layer 1112 refers to the dimension of the second fiber-resin layer 1112 along the height direction of the box body 10.

The thickness H₄ of the second fiber-resin layer 1112 may be determined according to actual application requirements, and specifically may be 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, or the like.

The thickness H₅ of the enhancement layer 1113 refers to the dimension of the enhancement layer 1113 along the height direction of the box body 10. The thickness H₅ of the enhancement layer 1113 may be determined according to actual application requirements, and specifically may be 0.1 mm, 0.2 mm, 0.3 mm, 0.4 mm, 0.5 mm, 0.6 mm, 0.7 mm, 0.8 mm, 0.9 mm, 1 mm, or the like.

In the aforementioned solution, setting the thickness of the first fiber-resin layer 1111 within a reasonable range, and/or setting the thickness of the second fiber-resin layer 1112 within a reasonable range, and/or setting the thickness of the enhancement layer 1113 within a reasonable range effectively controls the thickness and the weight of the protective plate 111, thereby improving the energy density of the battery apparatus 100.

According to some embodiments of the present application, please refer to FIGS. 2-8, the thickness of the first fiber-resin layer 1111 is less than or equal to the thickness of the second fiber-resin layer 1112.

Taking the electrical apparatus as a vehicle 1000 as an example, the second fiber-resin layer 1112 may possibly be exposed to the external environment. Configuring the thickness of the first fiber-resin layer 1111 to be less than or equal to the thickness of the second fiber-resin layer 1112 allows the protective plate 111 to possess higher energy density while reducing the risk of failure of the protective plate 111 caused by external forces acting on the protective plate 111.

In the aforementioned solution, since the thickness of the first fiber-resin layer 1111 is less than or equal to that of the second fiber-resin layer 1112, the second fiber-resin layer 1112 is allowed to possess higher structural strength, which can reduce the risk of excessive deformation of the protective plate 111 and corrosion of the enhancement layer 1113 when external forces act on the protective plate 111 through the second fiber-resin layer 1112.

According to some embodiments of the present application, please refer to FIGS. 2 to 8, the reinforcement layer 1114 includes a plurality of frame edges, the plurality of frame edges being connected end-to-end to form a frame structure.

The shape of the frame may include, but is not limited to, a double rectangular frame shape, a rectangular frame shape, or a grid frame shape.

The formation of the frame edges may include, but is not limited to, straight lines, curved lines, or wavy lines.

In the aforementioned solution, the reinforcement layer 1114 being of a frame structure facilitates positioning and helps to reduce assembly difficulty of the reinforcement layer 1114.

According to some embodiments of the present application, please refer to FIG. 2 to FIG. 8, the plurality of frame edges have equal widths.

In some embodiments, the frame edges may include a first frame edge 11141 and a second frame edge 11142. The width of a frame edge may refer to the dimension of the first frame edge 11141 in the second direction Y, and the width of the second frame edge 11142 may refer to the dimension of the second frame edge 11142 in the first direction.

In the aforementioned solution, since the widths of the plurality of frame edges are equal, a reduction in the design and manufacturing costs of the reinforcement layer 1114 is facilitated.

According to some embodiments of the present application, please refer to FIGS. 2 to 8, the protective plate 111 further includes a first frame edge 11141 extending along a first direction X and a second frame edge 11142 extending along a second direction Y, where a ratio of the width of the first frame edge 11141 to the dimension of the protective plate 11141 along a width direction of the first frame edge 111 is greater than or equal to 0.05; and/or a ratio of the width of the second frame edge 11142 to the dimension of the protective plate 111 along a width direction of the second frame edge 11142 is greater than or equal to 0.05.

In some embodiments, the protective plate 111 is of a square-plate structure, and the reinforcement layer 1114 is correspondingly of a square-frame structure. In other words, the first frame edge 11141 and the second frame edge 11142 are perpendicular to each other, the dimension W2 of the protective plate 111 along the width direction of the first frame edge 11141 is the width of the protective plate 111, and the dimension L of the protective plate 111 along the width direction of the second frame edge 11142 is the length of the protective plate 111.

The ratio of the width W1 of the first frame edge 11141 to the dimension W2 of the protective plate 111 along the width direction of the first frame edge 11141 may be determined according to specific application requirements, and may specifically be 0.05, 0.1, 0.15, 0.2, or the like. Similarly, the ratio of the width W3 of the second frame edge 11142 to the dimension L of the protective plate 111 along the width direction of the second frame edge 11142 may be determined according to actual application requirements, and may specifically be 0.05, 0.1, 0.15, 0.2, or the like.

In the aforementioned solution, this allows the first frame edge 11141 and/or the second frame edge 11142 to have a relatively large width, thereby improving the structural strength of the protective plate 111. Additionally, in embodiments where the box body 10 is connected to the protective plate 111 through the second region 11110, such a configuration facilitates enhancing the connection strength between the box body 10 and the protective plate 111.

According to some embodiments of the present application, please refer to FIGS. 2 to 8, the protective plate 111 is provided with a plurality of mounting holes 13, the mounting holes 13 being disposed in the second region 11110.

The mounting holes 13 may be clear holes or threaded holes.

In some embodiments, the mounting holes 13 are arranged around the first region 1119. In other words, when a fastener is disposed in the mounting hole 13, the fastener does not penetrate the sealed cavity 1115, which, on one hand, enables the fastener to have a high connection strength, and on the other hand, enables the sealed cavity 1115 to have a favorable sealing performance.

In the aforementioned solution, since the mounting holes 13 are located in the second region 11110, after connecting the protective plate 111 to the box body 10, the first region 1119 remains highly sealed, such that the risk of corrosion of the enhancement layer 1113 is relatively low.

According to some embodiments of the present application, please refer to FIGS. 2 to 8, the first fiber-resin layer 1111 includes a plurality of layers of first fiber-reinforced prepregs stacked on each other, the second fiber-resin layer 1112 includes a plurality of layers of second fiber-reinforced prepregs stacked on each other, and the reinforcement layer 1114 includes a plurality of layers of third fiber-reinforced prepregs stacked on each other.

The fibers in each layer of first fiber-reinforced prepreg are unidirectionally arranged. The fiber arrangement directions of two adjacent layers of first fiber-reinforced prepregs are stacked in a cross-ply arrangement at approximately 90°, and the allowable deviation range for the ply angles of the unidirectional tapes 111 of the two adjacent layers of first fiber-reinforced prepregs is ±20°. When subjected to a tensile force along the fiber extension direction, the fibers in the first fiber-reinforced prepreg can effectively bear its tensile force. By arranging the fiber arrangement directions of adjacent first fiber-reinforced prepregs in an approximately 90° cross-ply stacked configuration, the stress uniformity of the first fiber-resin layer 1111 in all directions is improved.

In another embodiment, the fibers in the first fiber-reinforced prepreg form a woven fabric in an interlaced pattern.

The fiber arrangements of the second fiber-reinforced prepreg and the third fiber-reinforced prepreg are similar to that of the first fiber-reinforced prepreg and will not be elaborated here. In the aforementioned solution, while improving the strength and rigidity of the protective plate 111, the multi-layer structure helps disperse stress and reduce stress concentration phenomena, thereby enhancing fatigue resistance of the material.

According to some embodiments of the present application, the first fiber-resin layer 1111, the second fiber-resin layer 1112, and the reinforcement layer 1114 are each independently selected from a glass fiber-reinforced polyamide resin member, a glass fiber-reinforced polypropylene resin member, a glass fiber-reinforced polyethylene resin member, a glass fiber-reinforced polycarbonate resin member, or a glass fiber-reinforced polystyrene resin member.

According to some embodiments of the present application, the enhancement layer 1113 is a steel plate, an outer surface of the steel plate being provided with a galvanized layer, a galvanized iron alloy layer, or an electrophoretic paint protective layer.

In the aforementioned solution, since the outer surface of the steel plate is provided with the zinc coating, zinc-iron alloy coating, or electrophoretic paint protective coating, the enhancement layer 1113 is endowed with high wear resistance performance.

According to some embodiments of the present application, please refer to FIG. 1, the present application provides an electrical apparatus, which includes the battery apparatus 100 according to one or more of the aforementioned embodiments, the battery apparatus 100 being configured to provide electrical energy.

In the aforementioned solution, since the battery apparatus 100 according to one or more of the aforementioned embodiments exhibits high reliability, the electrical apparatus including the battery apparatus 100 according to one or more of the aforementioned embodiments also exhibits high reliability.

According to some embodiments of the present application, please refer to FIG. 7, the present application provides a battery apparatus 100. The battery apparatus 100 includes a box body 10, a battery cell 20, and a protective plate 111. The battery cell 20 is disposed within the box body 10. The protective plate 111 is disposed at the bottom of the battery cell 20 along a gravity direction, the protective plate 111 including a first fiber-resin layer 1111, an enhancement layer 1113, a second fiber-resin layer 1112, and a reinforcement layer 1114, and the protective plate 111 including a first region 1119, where within the first region 1119, the first fiber-resin layer 1111, the enhancement layer 1113, and the second fiber-resin layer 1112 are sequentially stacked, the first fiber-resin layer 1111 being located on a side of the enhancement layer 1113 facing the battery cell 20, and the protective plate 111 further including a second region 11110, where within the second region 11110, the first fiber-resin layer 1111, the second fiber-resin layer 1112, and the reinforcement layer 1114 are sequentially stacked. Within the second region 11110, the first fiber-resin layer 1111, the second fiber-resin layer 1112, and the reinforcement layer 1114 are sequentially stacked, a surface of the reinforcement layer 1114 facing away from the second fiber-resin layer 1112 being at least partially flush with a surface of the second fiber-resin layer 1112 facing away from the enhancement layer 1113 within the first region 1119. The first fiber-resin layer 1111 is of a flat-plate structure. The second region 11110 is arranged surrounding the first region 1119. The protective plate 111 includes a plurality of first regions 1119, the plurality of first regions 1119 being arranged at intervals, and a portion of the second region 11110 being located between two adjacent first regions 1119.

According to some embodiments of the present application, please refer to FIG. 8, the present application provides a battery apparatus 100. The battery apparatus 100 includes a box body 10, a battery cell 20, and a protective plate 111. The battery cell 20 is disposed within the box body 10. The protective plate 111 is disposed at the bottom of the battery cell 20 along a gravity direction, the protective plate 111 including a first fiber-resin layer 1111, an enhancement layer 1113, a second fiber-resin layer 1112, and a reinforcement layer 1114, and the protective plate 111 including a first region 1119, where within the first region 1119, the first fiber-resin layer 1111, the enhancement layer 1113, and the second fiber-resin layer 1112 are sequentially stacked, the first fiber-resin layer 1111 being located on a side of the enhancement layer 1113 facing the battery cell 20, and the protective plate 111 further including a second region 11110, where within the second region 11110, the reinforcement layer 1114, the first fiber-resin layer 1111, and the second fiber-resin layer 1112 are sequentially stacked. Within the second region 11110, the reinforcement layer 1114, the first fiber-resin layer 1111, and the second fiber-resin layer 1112 are sequentially stacked, a surface of the reinforcement layer 1114 facing away from the first fiber-resin layer 1111 being at least partially flush with a surface of the first fiber-resin layer 1111 facing away from the enhancement layer 1113 within the first region 1119. The second fiber-resin layer 1112 is of a flat-plate structure. The second region 11110 is arranged surrounding the first region 1119. The protective plate 111 includes a plurality of first regions 1119, the plurality of first regions 1119 being arranged at intervals, and a portion of the second region 11110 being located between two adjacent first regions 1119.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A battery apparatus, comprising:
a box body;
a battery cell disposed within the box body;
a protective plate disposed at the bottom of the battery cell along a gravity direction, the protective plate comprising a first fiber-resin layer, an enhancement layer, a second fiber-resin layer, and a reinforcement layer, and the protective plate comprising a first region, wherein within the first region, the first fiber-resin layer, the enhancement layer, and the second fiber-resin layer are sequentially stacked, the first fiber-resin layer being located on a side of the enhancement layer facing the battery cell, and the protective plate further comprising a second region, wherein within the second region, the first fiber-resin layer, the second fiber-resin layer, and the reinforcement layer are sequentially stacked; or the reinforcement layer, the first fiber-resin layer, and the second fiber-resin layer are sequentially stacked.

2. The battery apparatus according to claim 1, wherein within the second region, the first fiber-resin layer, the second fiber-resin layer, and the reinforcement layer are sequentially stacked, a surface of the reinforcement layer facing away from the second fiber-resin layer being at least partially flush with a surface of the second fiber-resin layer facing away from the enhancement layer within the first region.

3. The battery apparatus according to claim 2, wherein the first fiber-resin layer is of a flat-plate structure.

4. The battery apparatus according to claim 1, wherein within the second region, the reinforcement layer, the first fiber-resin layer, and the second fiber-resin layer are sequentially stacked, a surface of the reinforcement layer facing away from the first fiber-resin layer being at least partially flush with a surface of the first fiber-resin layer facing away from the enhancement layer within the first region.

5. The battery apparatus according to claim 4, wherein a sealant injection groove is formed on a side of the reinforcement layer facing the battery cell, the sealant injection groove being configured to accommodate a sealant.

6. The battery apparatus according to claim 5, wherein the depth of the sealant injection groove is 0.1 mm-1 mm.

7. The battery apparatus according to claim 4, wherein the second fiber-resin layer is of a flat-plate structure.

8. The battery apparatus according to any one of claims 1-5, wherein the second region is arranged surrounding the first region.

9. The battery apparatus according to claim 8, wherein the protective plate comprises a plurality of first regions, the plurality of first regions being arranged at intervals, and a portion of the second region being located between two adjacent first regions.

10. The battery apparatus according to any one of claims 1-9, wherein the protective plate further comprises an adhesive layer, the enhancement layer and the first fiber-resin layer being connected via the adhesive layer, and/or the enhancement layer and the second fiber-resin layer being connected via the adhesive layer.

11. The battery apparatus according to claim 10, wherein the thickness of the adhesive layer is 0.05 mm-0.5 mm.

12. The battery apparatus according to any one of claims 1-11, wherein the thickness of the reinforcement layer is greater than or equal to the thickness of the enhancement layer.

13. The battery apparatus according to any one of claims 1-12, wherein the thickness of the first fiber-resin layer is 0.1 mm-1.2 mm; and/or the thickness of the second fiber-resin layer is 0.1 mm-1.2 mm; and/or the thickness of the enhancement layer is 0.1 mm-1 mm.

14. The battery apparatus according to any one of claims 1-13, wherein the thickness of the first fiber-resin layer is less than or equal to the thickness of the second fiber-resin layer.

15. The battery apparatus according to any one of claims 1-14, wherein the reinforcement layer comprises a plurality of frame edges, the plurality of frame edges being connected end-to-end to form a frame structure.

16. The battery apparatus according to claim 15, wherein the plurality of frame edges have equal widths.

17. The battery apparatus according to claim 15, wherein the protective plate further comprises a first frame edge extending along a first direction and a second frame edge extending along a second direction, wherein
a ratio of the width of the first frame edge to the dimension of the protective plate along a width direction of the first frame edge is greater than or equal to 0.05; and/or
a ratio of the width of the second frame edge to the dimension of the protective plate along a width direction of the second frame edge is greater than or equal to 0.05.

18. The battery apparatus according to any one of claims 1-17, wherein the protective plate is provided with a plurality of mounting holes, the mounting holes being disposed in the second region.

19. The battery apparatus according to any one of claims 1-18, wherein the first fiber-resin layer comprises a plurality of layers of first fiber-reinforced prepregs stacked on each other, the second fiber-resin layer comprises a plurality of layers of second fiber-reinforced prepregs stacked on each other, and the reinforcement layer comprises a plurality of layers of third fiber-reinforced prepregs stacked on each other.

20. The battery apparatus according to claim 19, wherein the first fiber-resin layer, the second fiber-resin layer, and the reinforcement layer are each independently selected from a glass fiber-reinforced polyamide resin member, a glass fiber-reinforced polypropylene resin member, a glass fiber-reinforced polyethylene resin member, a glass fiber-reinforced polycarbonate resin member, or a glass fiber-reinforced polystyrene resin member.

21. The battery apparatus according to any one of claims 1-20, wherein the enhancement layer is a steel plate, an outer surface of the steel plate being provided with a galvanized layer, a galvanized iron alloy layer, or an electrophoretic paint protective layer.

22. An electrical apparatus, comprising the battery apparatus according to any one of claims 1-21, the battery apparatus being configured to provide electrical energy.
